# EUROPÄISCHE PATENTSCHRIFT

(11) **EP 3 092 747 B1**
(45) Veröffentlichungstag und Bekanntmachung des Hinweises auf die Patenterteilung: **06.03.2019**
(21) Anmeldenummer: 15741771.8
(22) Anmeldetag: 23.03.2015
(51) Int. Cl.: H04L 12/24

(54) **VERFAHREN ZUM EINBEZIEHEN EINES KOMMUNIKATIONSGERÄTS IN EIN NETZWERK UND ANORDNUNG AUFWEISEND ZUMINDEST EINE NETZWERKFILTERKOMPONENTE UND ZUMINDEST EINEN KONFIGURATIONSSERVER**
METHOD FOR INCORPORATING A COMMUNICATION DEVICE IN A NETWORK, AND ARRANGEMENT HAVING AT LEAST ONE NETWORK FILTER COMPONENT AND AT LEAST ONE CONFIGURATION SERVER
PROCÉDÉ SERVANT À IMPLIQUER UN APPAREIL DE COMMUNICATION DANS UN RÉSEAU ET ENSEMBLE COMPORTANT AU MOINS UN COMPOSANT DE FILTRE DE RÉSEAU ET AU MOINS UN SERVEUR DE CONFIGURATION

(30) Priorität: 22.05.2014 DE 102014209797
(43) Veröffentlichungstag der Anmeldung: 16.11.2016
(73) Patentinhaber: Siemens Aktiengesellschaft, 80333 München (DE)
(72) Erfinder: HUTH, Hans-Peter, 80638 München (DE); SCHEFFEL, Matthias, 82008 Unterhaching (DE)
(86) Internationale Anmeldenummer: PCT/EP2015/056077
(87) Internationale Veröffentlichungsnummer: WO 2015/176847

(56) Entgegenhaltungen:
- US-A1- 2006 050 681
- US-A1- 2013 132 541
- US-A1- 2013 265 910
- US-A1- 2014 063 531
- US-B1- 6 223 218

## Beschreibung

Die Erfindung betrifft ein Verfahren zum Einbeziehen eines Kommunikationsgeräts in ein Netzwerk sowie eine Anordnung, welche zumindest eine Netzwerkfilterkomponenten, insbesondere einen Filterswitch, sowie zumindest einen Konfigurationsserver aufweist.

Sollen Kommunikationsgeräte in einem Netzwerk betrieben werden, so müssen sie zunächst nach dem Einschalten konfiguriert werden, also beispielsweise die Software, insbesondere auch Software für das Betriebssystem, an die Erfordernisse des Netzwerks und/oder an die des Benutzers durch Auswahl der geeigneten Softwarekomponenten angepasst werden. Diese Konfiguration bezieht sich auf Teile des Betriebssystems wie beispielsweise welche IP-Adressen verwendet werden, woher diese bezogen werden, oder welcher DNS (Dynamic Name Service) verwendet wird. Auch Anwendungen, beispielsweise Programme oder Applikationen, auf dem Gerät, insbesondere Endgerät, beispielsweise etwa PC's, PDAs, Smartphones etc. benötigen in der Regel eine Konfiguration.

Es sind unterschiedliche Möglichkeiten zur Konfiguration gebräuchlich, welche einzeln oder nebeneinander genutzt werden. Insbesondere handelt es sich hierbei um eine lokal, im Endgerät vorhandene Konfiguration, eine automatische Konfiguration bei der mittels eines Algorithmus Konfigurationsdaten erzeugt werden oder das Laden einer oder mehrerer Konfigurationen von entfernten Servern.

Wird nun ein Kommunikationsgerät in einem Netzwerk betrieben, so ist ein wichtiger Aspekt die Begrenzung der Zugriffsmöglichkeiten des Kommunikationsgeräts in dem Netzwerk, um die Sicherheit des Netzwerks zu gewährleisten.

Die Offenlegungsschrift US 2006/0050681 A1 offenbart ein Verfahren zur automatischen Konfiguration eines IP Telefongeräts, die ihm das Erhalten eines "Leases" in einem virtuellen Subnetz ermöglicht, während es mit einem anderem physikalisch verbunden ist.

Die Offenlegungsschrift US 2014/0063531 offenbart eine Konfiguration eines Imaging- oder Druck-Geräts mit einem Speicher zum Abspeichern eines Host-Namens eines Konfigurationsservers, von dem es Konfigurationsdaten erhält.

Es ist Aufgabe der vorliegenden Erfindung, eine Möglichkeit zu schaffen, ein Kommunikationsgerät derart in ein Netzwerk einzubeziehen, dass gleichermaßen die Sicherheit des Netzwerks gewährleistet ist und die Einbeziehung effektiv vorgenommen wird.

Diese Aufgabe wird durch ein Verfahren oder eine Anordnung gemäß den unabhängigen Ansprüchen gelöst. Vorteilhafte Weiterbildungen sind Gegenstand der abhängigen Ansprüche.

Gemäß einem Verfahren wird zum Einbeziehen eines Kommunikationsgeräts in ein Netzwerk also zuerst nur eine Verbindung zu einem oder mehreren Konfigurationsservern gestattet. Von diesem zumindest einem Konfigurationsserver werden Konfigurationsdaten bezogen mittels denen die Konfiguration durchgeführt wird derart, dass ein Zugriff des Kommunikationsgeräts nur auf zumindest einen ausgewählten Produktivserver gestattet ist.

Ein Aspekt der Erfindung ist es also, dem Kommunikationsgerät zunächst nur eine Verbindung zu gestatten, die einen Bezug von Konfigurationsdaten ermöglicht und mittels dieser Konfigurationsdaten Zugriffsrechte des Kommunikationsgeräts für den Normalbetrieb, also insbesondere einen Betrieb nach erfolgter Einbindung in das Netzwerk, zuzuweisen.

Es ist also in dem Netzwerk eine Menge von Konfigurationsservern vorgesehen die zumindest einen Konfigurationsserver enthält. Zum Herstellen einer Verbindung eines Kommunikationsgeräts mit dem Netzwerk wird zunächst eine Verbindung mit einer Auswahl oder Teilmenge aus der Menge der Konfigurationsserver gestattet. Diese Auswahl oder Teilmenge kann auch in der gesamten Menge bestehen.

Eine Festlegung der Auswahl kann insbesondere unter Verwendung von Kenndaten des Kommunikationsgeräts erfolgen, welche dieses beispielsweise bei einer Anfrage zum Herstellen einer Verbindung mit dem Netzwerk mit sendet.

Von zumindest einem dieser Konfigurationsserver oder diesem Konfigurationsserver werden Daten zur Konfiguration bezogen. Es können also insbesondere von der gesamten Auswahl oder nur einem oder mehreren Konfigurationsservern aus der Auswahl Daten bezogen werden. Unter Verwendung dieser Daten oder davon abgeleiteten Daten erfolgt eine Konfiguration der Zugriffsrechte des Kommunikationsgeräts im Netzwerk.

Insbesondere kann die Verbindung zu zumindest einem Konfigurationsserver auf eine Anfrage eines Kommunikationsgeräts initiiert werden, das eine Verbindung mit dem Netzwerk herstellen möchte. Diese Verbindung kann insbesondere über eine Netzwerkzugangskomponente, beispielsweise einen Zugangsswitch realisiert werden.

Insbesondere wird eine Netzwerkfilterkomponente, beispielsweise ein Filterswitch, nach Empfang von Daten von dem zumindest einem Konfigurationsserver dahingehend umgeändert, dass er vom Kommunikationsgerät stammende Daten nun - für die Dauer dieser Kommunikationsverbindung- an den zumindest einen Produktivserver leitet, auf den das Kommunikationsgerät zugreifen darf.

Insbesondere bei einer Aufteilung des Netzwerks in logische Teilbereiche wird so durch eine Netzwerkfilterkomponente festgelegt, ob vom Kommunikationsgerät stammende Daten in ein Teilnetz für die Konfiguration oder in ein Teilnetz für den Produktivbetrieb geleitet werden.

Ein Vorteil ist es also insbesondere, dass in einer Phase einer initialen Konfiguration, in der ein Gerät neu in ein Netzwerk kommt, es gewährleistet ist, dass dieses Endgerät zum einen die korrekte Konfiguration erhält und zum anderen keine unerlaubten Zugriffe tätigen kann, solange die Gerätekonfiguration nicht abgeschlossen ist.

Eine Anordnung gemäß der Erfindung weist eine Netzwerkfilterkomponente auf, über die eine Verbindung zu zumindest einem Konfigurationsserver hergestellt werden kann sowie zumindest einen Konfigurationsserver.

Die Netzwerkfilterkomponente ist derart ausgebildet, dass ohne vorgenommene Konfiguration eine Verbindung nur zu zumindest einem Konfigurationsserver erfolgt. Auf eine Anfrage, die von der einen Netzwerkfilterkomponente an den Konfigurationsserver geleitet wird, können Konfigurationsdaten vom Konfigurationsserver bezogen werden. Unter Benutzung dieser Konfigurationsdaten erfolgt eine Konfiguration derart, dass dem betreffenden Kommunikationsgerät ausschließlich Zugriff zu einer Auswahl aus Produktivservern gestattet wird.

Weitere vorteilhafte Ausgestaltungen werden im Folgenden beschrieben und sind teilweise in den Figuren dargestellt. Es zeigen:
- Figur 1: ein schematisches Szenario über die Ausgestaltung von Zugriffsrechten von Kommunikationsgeräten auf Servern in einem Netzwerk;
- Figur 2: eine beispielhafte Ausgestaltung der Erfindung, bei der ein oder mehrere Kommunikationsgeräte über einen Zugang unter Verwendung eines Filterswitches mit zumindest einem entsprechenden Konfigurationsserver und Produktivserver verbunden werden;
- Figur 3: eine beispielhafte Ausgestaltung der Erfindung mit einer Mehrzahl von Zugangsswitches;
- Figur 4: eine beispielhafte Ausgestaltung der Erfindung mit einer Mehrzahl von Zugangsswitches und Filterswitches.

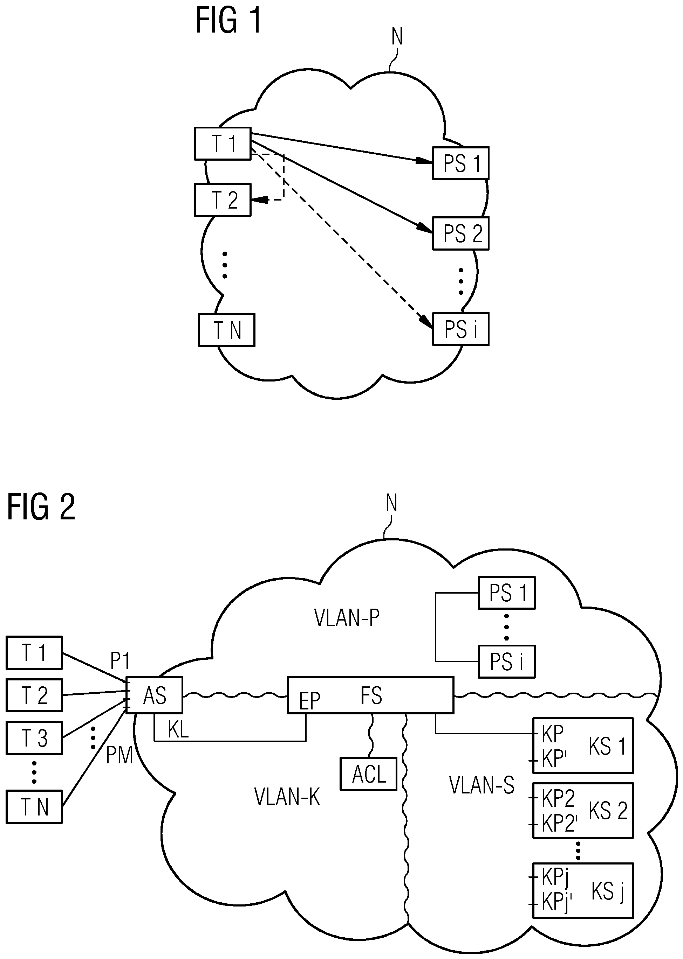

In Figur 1 ist schematisch ein Netzwerk N dargestellt, in dem die Kommunikationsgeräte T1, T2, ... TN betrieben werden können. Es soll nun die Zugriffsmöglichkeit der einzelnen Kommunikationsgeräte beschränkt werden. Beispielhaft ist in Figur 1 ein Zugriff des Kommunikationsgeräts T1 auf das Kommunikationsgerät T2 sowie auf den Produktivserver PSi nicht gestattet. Dies ist über die gestrichelten Linien dargestellt. Ein Zugriff auf andere Produktivserver, den Produktivserver PS1 sowie den Produktivserver PS2 soll gestattet sein.

In Figur 2 ist eine beispielhafte Ausgestaltung der Erfindung mit einem Netz gemäß dem IEEE 802.3 Ethernet Standard dargestellt. Ein erstes Kommunikationsgerät T1, ein zweites Kommunikationsgerät T2 bis zu einem n-ten Kommunikationsgerät TN sind mit einem Zugangsswitch AS als Netzwerkzugangskomponente verbunden.

Eine Netzwerkzugangskomponente ermöglicht die Herstellung einer Verbindung zu einem Netzwerk.

Unter einem "switch" bzw. auf Deutsch "Schalter", "Umschalter" "Netzwerkweiche" oder "Verteiler" wird in Zusammenhang mit Computer-Netzwerken wird insbesondere ein Kopplungselement verstanden, welches Teilnetze oder Netzwerksegmente miteinander verbindet. Über einen "switch" werden Daten weitergeleitet und zwar an die Anschlüsse bzw. Ports die zu dem Zielknoten führen, für den die Daten bestimmt sind.

Die Verbindung zwischen einem Kommunikationsgerät T1, T2,... TN kann jeweils drahtlos oder leitungsgebunden realisiert werden. Ein Kommunikationsgerät T1, T2, ... TN kann Daten an einen Konfigurationsserver senden, beispielsweise Konfigurationsanfragen, welche zum Auffinden von DNS (Domain Name Service)- Servern dienen.

Der Zugangsswitch AS ermöglicht einen Zugang zum Netzwerk N, also insbesondere zum Teilnetz für den Produktivbetrieb VLAN-P wie dem Teilnetz für die Konfiguration VLAN-K.

In Figur 1 ist beispielhaft eine Ausführung mit nur einem Zugangsswitch AS dargestellt. Alternativ können mehrere Zugangsswitches vorgesehen sein, um beispielsweise die Skalierbarkeit des Netzes zu erhöhen. Jedes Kommunikationsgerät T1,T2,..TN ist wahlweise mit einem oder einer Mehrzahl von Zugangsswitches AS verbindbar bzw. verbunden.

In einem ersten Ausgangszustand sendet der Zugangsswitch AS Daten zumindest eines Kommunikationsgeräte T1, T2, ... TN im Teilnetz für die Konfiguration VLAN-K zu einem Filterswitch FS.

Optional weist der Zugangsswitch AS die Möglichkeit auf, mehrere Endgeräte an unterschiedlichen Ports P1, P2, ... PM anzuschließen. In diesem Fall sind im Zugangsswitch AS interne Filterregeln implementiert, welche den Querverkehr im Zugangsswitch AS verhindern, d.h. dass beispielsweise eine Verbindung vom Kommunikationsgerät T1 zum Kommunikationsgerät T2 direkt über den Zugangsswitch AS erfolgt. Es kann hierbei eine Anzahl M von Ports P1, P2, ... PM vorgesehen sein, wobei M größer, kleiner oder gleich der Anzahl N der Endgeräte T1, T2, ... TN sein kann.

Alternativ oder zusätzlich ist es vorgesehen, dass zumindest zwei, mehrere oder alle Kommunikationsgeräte T1, T2, ... TN an einen Port verbindbar bzw. verbunden sind.
Der Zugangsswitch AS weist gemäß einer Ausgestaltung eine Mehrzahl von Ports P1, P2, ... PM auf, an denen sich je ein oder mehrere Kommunikationsgeräte T1, T2, ... TN mit dem Zugangsswitch AS verbinden können.

Der Zugangsswitch AS leitet von Kommunikationsgeräten T1, T2, ... TN stammende Daten über eine Verbindung KL über das Teilnetz für die Konfiguration VLAN-K an den Filterswitch FS weiter. Weiterhin empfängt der Zugangsswitch AS über den Filterswitch FS von einem Konfigurationsserver KS vorgegebene Einstellungen. Im Netzwerk N ist der Filterswitch FS derart eingebunden, dass ein Zugang sowohl zum Teilnetz für die Konfiguration VLAN-K als auch für das Teilnetz für den Produktivbetrieb VLAN-P besteht.

In Figur 2 ist beispielhaft eine Ausführung mit einem Filterswitch FS als Netzwerkfilterkomponente dargestellt. Alternativ kann eine Mehrzahl von Filterswitches vorgesehen sein, welche optional auch noch Zugang zu weiteren Bereichen des Netzwerkes N aufweisen.

Über eine Netzwerkfilterkomponente können Daten zu bestimmten Destinationen geleitet werden, insbesondere auch unter Verwendung von der Komponente zugänglichen Regeln.

Der Filterswitch weist einen Kommunikations- bzw. Endgeräteport EP auf, über den Daten, beispielsweise Datenpakete, von einem Kommunikationsgerät T1, T2, ... TN ausschließlich zu einem Konfigurationsport KP des Konfigurationsservers KS geleitet werden.
Gemäß einer weiteren Ausgestaltung ist eine Mehrzahl von Endgeräteports vorgesehen, mit denen jeweils ein oder mehrere Kommunikationsgeräte T1, T2, ... TN über einen oder mehrere Zugangsswitches AS verbindbar sind.

In Figur 2 ist beispielhaft ein Konfigurationsserver KS1 mit einem Konfigurationsport KP dargestellt sowie einem Konfigurationsport KP' dargestellt. Alternativ kann nur ein Konfigurationsport KP oder eine beliebige Mehrzahl von Konfigurationsports KP vorgesehen sein.

Die Festlegung, dass Daten, welche von einem der Eingangsports EP stammen, zu einem bestimmten Konfigurationsserver KS1, KS2, ... KSj und dabei wiederum zu einem festgelegten Konfigurationsport KP, KP' bzw. KP2, KP2', etc. des Konfigurationsservers KS1 bzw. KS2, etc.... geleitet werden, wird über eine Zugangskontrollliste ACL vorgenommen.

Mit Hilfe der Daten zur Konfiguration eines bestimmten Endgeräts von einem Konfigurationsserver KS1, KS2, ... KSj werden Einstellungen am Zugangsswitch AS dahingehend geändert, dass nun Daten von dem betreffenden Kommunikationsgerät T1, T2, ... TN nun im Teilnetz für den Produktivbetrieb VLAN-P an den Filterswitch FS gesendet werden.

Alternativ oder zusätzlich wird eine Änderung der Einstellungen am Zugangsswitch durch Empfang von Daten von zumindest einem Konfigurationsserver getriggert.

Weiterhin wird am Filterswitch FS über die Zugangskontrollliste ACL festgelegt, auf welchen oder welche der Produktivserver PS1, PS2, PSi das betreffende Kommunikationsgerät T1, T2, ... TN zugreifen darf.

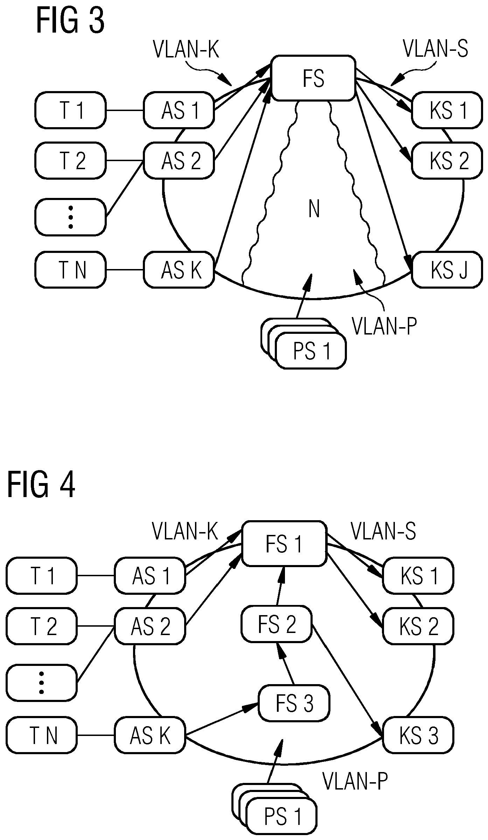

In Fig. 3 ist eine beispielhafte Ausgestaltung eines Netzwerks als Standard Ethernet gezeigt, welches logisch in drei Teilbereiche unterteilt ist, ein Teilnetz für die Konfiguration VLAN-K, ein Teilnetz VLAN- S in dem die Konfigurationsserver KS1, KS2, ... KSN organisiert sind, sowie ein Teilnetz VLAN-P für den Produktivbereich, dem Produktivserver PS1, PS2, ... PSJ zugeordnet sind. Durch diese 3-Teilung wird die Robustheit des Netzes gegenüber Attacken weiter erhöht, da ein neues Kommunikationsgerät zunächst nur Zugang zu dem ihm zugeordneten Zugangsswitch AS hat.

Gemäß der in Fig. 3 gezeigten Ausgestaltung ist eine Mehrzahl von Zugangsswitches AS vorgesehen, die jeweils einem oder mehreren Endgeräten T1, T2, ... TN zugeordnet sind.

Alternativ kann auch vorgesehen sein, dass einem Kommunikationsgerät T1, T2, ... TN eine Mehrzahl von Zugangsswitches AS zugeordnet ist. Damit kann beispielsweise die Auslastung der Zugangsswitches besser gesteuert werden. Weiterhin kann sowohl ein Kommunikationsgerät T1, T2, ... TN mehreren Zugangsswitches AS als auch ein Zugangsswitch AS mehreren Kommunikationsgeräten T1, T2, ... TN zugeordnet sein.

In Fig. 4 ist eine weitere beispielhafte Ausgestaltung gezeigt, bei der ebenfalls eine logische 3-Teilung des Netzes vorgenommen wurde und eine Mehrzahl von Zugangsswitches AS1, AS2,...ASK vorgesehen sind. Darüber hinaus sind 3 Filterswitches FS1, FS2, FS 3 vorgesehen. Die Verwendung einer Gruppe von Filterswitches erhöht die Skalierbarkeit des Systems, d.h. eine größere Anzahl von Kommunikationsgeräten kann mit einer jeweils größeren Anzahl von Konfigurationsservern und Produktivservern verbunden werden.

Anstelle von drei kann eine beliebige Anzahl von Filterswitches vorgesehen sein, um beispielsweise der Größe, logischen Aufteilung und Auslastung des Netzes Rechnung zu tragen.

Es wurde eine Reihe von konkreten Ausgestaltungen der Erfindung beschrieben. Weitere Ausgestaltungen mit der Zielsetzung, nämlich dass eine zweistufige Einbindung in ein Netzwerk derart vorgenommen wird, dass zunächst nur eine Verbindung mit zumindest einem Server, von dem für eine Konfiguration des Kommunikationsgeräts im Netzwerk erforderliche Daten bezogen werden und unter Verwendung dieser Daten Zugriffsrechte für eine im folgenden aufzubauende Kommunikationsverbindung festgelegt werden, lassen sich auch mit Kombinationen aus den aufgeführten Ausgestaltungen oder einzelner Aspekte hiervon sowie Abwandlungen erzielen.

Weiterhin ist die Erfindung auch in komplexeren Netzen einsetzbar. So können in dem Netz eine beliebige Menge weiterer Switche und Router vorhanden sein. Alle diese Elemente müssen eine Technologie zur Netzvirtualisierung unterstützen, z.B. VLAN (IEEE 802.1Q), um die Zugriffsmöglichkeiten von Kommunikationsgeräten gezielt einzuschränken.

In den Ausführungsbeispielen waren die Kommunikationsgeräte T1, T2, ... TN sind als Endgeräte ausgestaltet. Alternativ können einzelne oder alle Kommunikationsgeräte T1, T2, ... TN auch als Geräte für die Realisierung eines Netzwerkknotens ausgestaltet sein, zu dem und von dem Daten geleitet werden.

## Patentansprüche

1. Verfahren zum Einbeziehen eines Kommunikationsgeräts (T1, T2, ... TN) in ein Netzwerk (N)
- mit einer Menge von Konfigurationsservern (KS1, KS2, ... KSj), welche zumindest zwei Konfigurationsserver (KS1, KS2, ... KSj) aufweist, und
- mit einer Menge von Produktivservern (PS1, PS2, ... PSi), welche zumindest zwei Produktivservern (PS1, PS2, ...
PSi) aufweist,
mit folgenden Schritten:
a) Herstellen einer Verbindung des Kommunikationsgeräts (T1, T2, ... TN) mit dem Netzwerk (N) über eine Netzwerkzugangskomponente (AS), wobei die Netzwerkzugangskomponente (AS) von dem Kommunikationsgerät (T1, T2,... TN) stammende Daten an eine Netzwerkfilterkomponente (FS) weiterleitet, wobei die Netzwerkfilterkomponente (FS) die Daten zunächst ausschließlich auf eine festgelegte Auswahl aus der Menge der Konfigurationsserver (KS1, KS2, ... KSj) weiterleitet;
b) Beziehen von Konfigurationsdaten von der festgelegten Auswahl der Konfigurationsserver (KS1, KS2, ... KSj), welche Zugriffsrechte des Kommunikationsgeräts (T1, T2,... TN) auf eine Auswahl aus der Menge von Produktivservern (PS1, PS2, ... PSi) festlegen;
c) Durchführen einer Konfiguration des Kommunikationsgeräts (T1, T2, ... TN) und der Netzwerkfilterkomponente (FS) unter Verwendung der bezogenen Konfigurationsdaten derart, dass ein Zugriff des Kommunikationsgeräts (T1, T2, ... TN) auf die Auswahl aus der Menge von Produktivservern (PS1, PS2, ... PSi) beschränkt ist.

2. Verfahren nach Anspruch 1, bei dem das Herstellen einer Verbindung zwischen dem Kommunikationsgerät (T1, T2, ... TN) und dem Netzwerk (N) über die Netzwerkzugangskomponente (AS), insbesondere einen Zugangsswitch (AS), und die Netzwerkfilterkomponente (FS) erfolgt.

3. Verfahren nach einem der vorhergehenden Ansprüche, wobei der Zugang zu einem oder mehreren Netzwerkknoten (PS1, PS2, ... PSi, KS1, KS2, ... KSj) über die Netzwerkfilterkomponente (FS), insbesondere einen Filterswitch, vorgenommen wird.

4. Verfahren nach einem der vorhergehenden Ansprüche, bei dem eine Verbindungsanfrage von einem Kommunikationsgerät (T1, T2, ... TN) über die Netzwerkzugangskomponente (AS) gesendet wird und auf diese Verbindungsanfrage hin die Verbindung, welche ausschließlich auf eine festgelegte Auswahl aus der Menge der Konfigurationsserver (KS1, KS2, ... KSj) beschränkt ist, hergestellt wird.

5. Verfahren nach einem der vorhergehenden Ansprüche, bei dem die Netzwerkfilterkomponente (FS),
- nach dem Herstellen einer Verbindung des Kommunikationsgeräts (T1, T2, ... TN) mit dem Netzwerk über die Netzwerkzugangskomponente (AS) zunächst bezüglich dieses Kommunikationsgeräts (T1, T2, ... TN) sich in einem ersten Status befindet, in welchem die Daten, welche von einem Kommunikationsgerät (T1, T2, ... TN) kommen, ausschließlich an die Auswahl von Konfigurationsservern (KS1, KS2, ... KSj) geleitet werden und
- nach dem Empfang von Daten von zumindest einem Konfigurationsserver (KS1, KS2, ... KSj) die Netzwerkfilterkomponente (FS) in einen zweiten Status umgeschaltet wird, bei dem beim erneuten Empfang von Daten von dem betreffenden Kommunikationsgerät (T1, T2, ... TN) über die Netzwerkzugangskomponente (AS) eine Weiterleitung dieser Daten an zumindest einen Produktivserver (PS1, PS2, ... PSi) aus der Auswahl aus der Menge von Produktivservern (PS1, PS2, ... PSi) erfolgt.

6. Verfahren nach einem der vorhergehenden Ansprüche, bei dem das Netzwerk (N) in zumindest zwei logische Teilbereiche unterteilt wird, von denen einer ein Teilnetz für die Konfiguration (VLAN-K) und der andere ein Teilnetz für den Produktivbetrieb (VLAN-P) darstellt.

7. Verfahren nach einem der vorhergehenden Ansprüche, bei dem die Daten von dem zumindest einen Konfigurationsserver (KS1, KS2, ... KSj) den Status der Netzwerkfilterkomponente (FS) und/oder Zugriffsrechte eines Kommunikationsgeräts (T1, T2, ... TN) auf einen oder mehrere Knoten (PS1, PS2, ... PSj), insbesondere Produktivserver, im Teilnetz für den Produktivbetrieb (VLAN-P) festlegen.

8. Anordnung aufweisend
- eine Netzwerkszugangskomponente (AS), insbesondere einen Zugangsswitch (AS),
- zumindest eine Netzwerkfilterkomponente (FS), insbesondere einen Filterswitch (FS),
- eine Menge von Konfigurationsservern (KS1, KS2, ... KSj), welche zumindest zwei Konfigurationsserver (KS1, KS2, ... KSj) aufweist,
- eine Menge von Produktionsservern (KS1, KS2, ..., KSj), welche zumindest zwei Produktionsserver (KS1, KS2, ..., KSj) aufweist,
- wobei die Anordnung dazu eingerichtet ist, ein Verfahren nach einem der vorangehenden Ansprüche auszuführen.

9. Netzwerk (N) mit einer Anordnung gemäß Anspruch 8, welches logisch in zumindest ein Teilnetzwerk für die Konfiguration (VLAN-K, VLAN-S) und ein Teilnetzwerk für den Produktivbetrieb (VLAN-P) unterteilt ist und mittels der Netzwerkfilterkomponente (FS) ein Zugriff auf beide Teilnetzwerke realisierbar ist.

## Claims

1. Method for incorporating a communication device (T1, T2, ... TN) in a network (N)
- having a set of configuration servers (KS1, KS2, ... KSj) having at least two configuration servers (KS1, KS2, ... KSj), and
- having a set of productive servers (PS1, PS2, ... PSi) having at least two productive servers (PS1, PS2, ... PSi),
having the following steps of:
a) establishing a connection between the communication device (T1, T2, ... TN) and the network (N) via a network access component (AS), wherein the network access component (AS) forwards data coming from the communication device (T1, T2,... TN) to a network filter component (FS), wherein the network filter component (FS) first of all forwards the data solely to a stipulated selection from the set of configuration servers (KS1, KS2, ... KSj);
b) obtaining configuration data from the stipulated selection of configuration servers (KS1, KS2, ... KSj), which data stipulate access rights of the communication device (T1, T2, ... TN) to a selection from the set of productive servers (PS1, PS2, ... PSi);
c) configuring the communication device (T1, T2, ... TN) and the network filter component (FS) using the configuration data which have been obtained in such a manner that access of the communication device (T1, T2, ... TN) is restricted to the selection from the set of productive servers (PS1, PS2, ... PSi) .

2. Method according to Claim 1, in which a connection is established between the communication device (T1, T2, ... TN) and the network (N) via the network access component (AS), in particular an access switch (AS), and the network filter component (FS).

3. Method according to one of the preceding claims, wherein the network filter component (FS), in particular a filter switch (FS), is used to access one or more network nodes (PS1, PS2, ... Psi, KS1, KS2, ... KSj).

4. Method according to one of the preceding claims, in which a connection request is transmitted by a communication device (T1, T2, ... TN) via the network access component (AS) and, in response to this connection request, the connection which is restricted solely to a stipulated selection from the set of configuration servers (KS1, KS2, ... KSj) is established.

5. Method according to one of the preceding claims, in which the network filter component (FS)
- after a connection has been established between the communication device (T1, T2, ... TN) and the network via the network access component (AS), is initially in a first status with respect to this communication device (T1, T2, ... TN), in which the data which come from a communication device (T1, T2, ... TN) are passed solely to the selection of configuration servers (KS1, KS2, ... KSj), and
- after receiving data from at least one configuration server (KS1, KS2, ... KSj), the network filter component (FS) is changed over to a second status in which, if data are received again from the relevant communication device (T1, T2, ... TN) via the network access component (AS), these data are forwarded to at least one productive server (PS1, PS2, ... PSi) from the selection from the set of productive servers (PS1, PS2, ... PSi) .

6. Method according to one of the preceding claims, in which the network (N) is subdivided into at least two logical sections, one of which constitutes a subnetwork for configuration (VLAN-K) and the other of which constitutes a subnetwork for productive operation (VLAN-P).

7. Method according to one of the preceding claims, in which the data from the at least one configuration server (KS1, KS2, ... KSj) stipulate the status of the network filter component (FS) and/or access rights of a communication device (T1, T2, ... TN) to one or more nodes (PS1, PS2, ... PSj), in particular productive servers, in the subnetwork for productive operation (VLAN-P).

8. Arrangement having
- a network access component (AS), in particular an access switch (AS),
- at least one network filter component (FS), in particular a filter switch (FS),
- a set of configuration servers (KS1, KS2, ... KSj) having at least two configuration servers (KS1, KS2, ... KSj),
- a set of production servers (KS1, KS2, ..., KSj) having at least two production servers (KS1, KS2, ..., KSj),
- wherein the arrangement is set up to carry out a method according to one of the preceding claims.

9. Network (N) having an arrangement according to Claim 8, which is logically subdivided into at least one subnetwork for configuration (VLAN-K, VLAN-S) and a subnetwork for productive operation (VLAN-P) and both subnetworks can be accessed by means of the network filter component (FS).

## Revendications

1. Procédé servant à impliquer un appareil de communication (T1, T2, ... TN) dans un réseau (N) avec :
- un ensemble de serveurs de configuration (KS1, KS2, ... KSj) qui comporte au moins deux serveurs de configuration (KS1, KS2, ... KSj) et
- un ensemble de serveurs de production (PS1, PS2, ... PSi) qui comporte au moins deux serveurs de production (PS1, PS2, ... PSi),
comportant les étapes suivantes :
a) réaliser une liaison de l'appareil de communication (T1, T2, ... TN) avec le réseau (N) via un composant d'accès de réseau (AS), le composant d'accès de réseau (AS) retransmettant à un composant de filtre de réseau (FS) des données provenant de l'appareil de communication (T1, T2, ... TN), le composant de filtre de réseau (FS) retransmettant les données tout d'abord exclusivement sur une sélection déterminée dans l'ensemble des serveurs de configuration (KS1, KS2, ... KSj) ;
b) se procurer des données de configuration de la sélection déterminée des serveurs de configuration (KS1, KS2, ... KSj) qui déterminent des droits d'accès de l'appareil de communication (T1, T2, ... TN) à une sélection dans l'ensemble de serveurs de production (PS1, PS2, ... PSi) ;
c) exécuter une configuration de l'appareil de communication (T1, T2, ... TN) et du composant de filtre de réseau (FS) en utilisant les données de configuration qu'on s'est procurées de telle sorte qu'un accès de l'appareil de communication (T1, T2, ... TN) à la sélection dans l'ensemble de serveurs de production (PS1, PS2, ... PSi) est limité.

2. Procédé selon la revendication 1, dans lequel la réalisation d'une liaison entre l'appareil de communication (T1, T2, ... TN) et le réseau (N) via le composant d'accès de réseau (AS), et plus particulièrement un commutateur d'accès (AS), et le composant de filtre de réseau (FS).

3. Procédé selon l'une des revendications précédentes, l'accès à un ou plusieurs noeuds de réseau (PS1, PS2, ... PSi, KS1, KS2, ... KSj) étant opéré via le composant de filtre de réseau (FS), et plus particulièrement un commutateur de filtre.

4. Procédé selon l'une des revendications précédentes, dans lequel une requête de liaison est émise par un appareil de communication (T1, T2, ... TN) via le composant d'accès de réseau (AS) et est réalisée, à la suite de cette requête de liaison, la liaison, qui est limitée exclusivement à une sélection déterminée dans l'ensemble des serveurs de configuration (KS1, KS2, ... KSj).

5. Procédé selon l'une des revendications précédentes, dans lequel le composant de filtre de réseau (FS),
- après la réalisation d'une liaison de l'appareil de communication (T1, T2, ... TN) avec le réseau via le composant d'accès de réseau (AS), se trouve tout d'abord, par rapport à cet appareil de communication (T1, T2, ... TN), dans un premier état dans lequel les données qui proviennent d'un appareil de communication (T1, T2, ... TN) sont amenées exclusivement à la sélection de serveurs de configuration (KS1, KS2, ... KSj) et,
- après la réception de données d'au moins un serveur de configuration (KS1, KS2, ... KSj), le composant de filtre de réseau (FS) est commuté sur un deuxième état dans lequel, à la nouvelle réception de données de l'appareil de communication concerné (T1, T2, ... TN) via le composant d'accès de réseau (AS), il y a retransmission de ces données à au moins un serveur de production (PS1, PS2, ... PSi) de la sélection dans l'ensemble de serveurs de production (PS1, PS2, ... PSi).

6. Procédé selon l'une des revendications précédentes, dans lequel le réseau (N) est divisé en au moins deux zones partielles logiques dont l'une représente un sous-réseau pour la configuration (VLAN-K) et l'autre, un sous-réseau pour le fonctionnement de production (VLAN-P).

7. Procédé selon l'une des revendications précédentes, dans lequel les données de l'au moins un serveur de configuration (KS1, KS2, ... KSj) déterminent l'état du composant de filtre de réseau (FS) et/ou des droits d'accès d'un appareil de communication (T1, T2, ... TN) à un ou plusieurs noeuds (PS1, PS2, ... PSj), et plus particulièrement serveurs de production, dans le sous-réseau pour le fonctionnement de production (VLAN-P).

8. Ensemble comportant :
- un composant d'accès de réseau (AS), et plus particulièrement un commutateur d'accès (AS) ;
- au moins un composant de filtre de réseau (FS), et plus particulièrement un commutateur de filtre (FS) ;
- un ensemble de serveurs de configuration (KS1, KS2 ... KSj) qui comporte au moins deux serveurs de configuration (KS1, KS2 ... KSj) ;
- un ensemble de serveurs de production (KSl, KS2, ... KSj) qui comporte au moins deux serveurs de production (KS1, KS2, ... KSj),
- l'ensemble étant aménagé pour exécuter un procédé selon l'une des revendications précédentes.

9. Réseau (N) comportant un ensemble selon la revendication 8, lequel réseau est divisé logiquement en au moins un sous-réseau pour la configuration (VLAN-K, VLAN-S) et un sous-réseau pour le fonctionnement de production (VLAN-P) et dans lequel un accès aux deux sous-réseaux peut être réalisé au moyen du composant de filtre de réseau (FS).
